# EUROPÄISCHE PATENTANMELDUNG

(11) **EP 1 186 982 A2**
(43) Veröffentlichungstag der Anmeldung: **13.03.2002**
(21) Anmeldenummer: 01119402.4
(22) Anmeldetag: 11.08.2001
(51) Int. Cl.: G05D 23/13

(54) **Mischbatterie für Kalt- und Heisswasser**

(30) Priorität: 08.09.2000 DE 10044684; 25.10.2000 DE 10052975
(71) Anmelder: Friedrich Grohe AG & Co. KG, 58675 Hemer (DE)
(72) Erfinder: Rüth, Andreas, 58675 Hemer (DE); Günther, Michael, 58636 Iserlohn (DE)

(57) **Zusammenfassung**

Bei einer Mischbatterie zum Bereiten von temperiertem Warmwasser mit einem wenigstens je einen Heiß- und Kaltwasseranschluss (11,10) und einen Mischwasserauslass aufweisenden Gehäuse (1), in dem auf der rechten Seite ein Mischventil (2) vorgesehen ist, wobei der Heißwasseranschluss (11) auf der linken Seite des Gehäuses (1) angeordnet und mit einem im Gehäuse (1) ausgebildeten Heißwasserkanal (13) mit dem Mischventil (2) verbunden ist, während der Kaltwasseranschluss (10) direkt mit dem Mischventil (2) verbunden ist und das erzeugte Mischwasser einer Mischwasserkammer (14) zugeführt wird, ist vorgeschlagen, dass im Gehäuse (1) im rückwärtigen Bereich zunächst ein mit dem Kaltwasseranschluss (10) in Verbindung stehender Kaltwasserkühlkanal (12) vor dem Heißwasserkanal (13) ausgebildet ist, derart, dass der Heißwasserkanal (13) zwischen dem Kaltwasserkühlkanal (12) und der Mischwasserkammer (14) angeordnet ist.

## Beschreibung

Die Erfindung betrifft eine Mischbatterie zum Bereiten von temperiertem Warmwasser, insbesondere für Duschen, Badewannen oder dergleichen, mit einem wenigstens je einen Heiß- und Kaltwasseranschluss und einen Mischwasserauslass aufweisenden Gehäuse, in dem auf der rechten Seite ein Mischventil vorgesehen ist, wobei der Heißwasseranschluss auf der linken Seite des Gehäuses angeordnet und mit einem im Gehäuse ausgebildeten Heißwasserkanal mit dem Mischventil verbunden ist, während der Kaltwasseranschluss direkt mit dem Mischventil verbunden ist und das erzeugte Mischwasser einer Mischwasserkammer zugeführt wird.

Eine derartige Mischbatterie ist aus der europäischen Patentschrift 0 242 680 B1 bekannt. Bei diesem Mischbatteriegehäuse kann durch die Anordnung des Heißwasserkanals im Bereich der Rückseite dieser Gehäusebereich auf etwa die Heißwasservorlauftemperatur beim Mischvorgang erhitzt werden. Wird insbesondere der hintere Bereich des Batteriekörpers während des Heißwasserzulaufs oder kurz danach vom Benutzer angefasst oder berührt, so kann dies durch die hohe Temperatur zu Schreckreaktionen oder gar zu Verbrennungen führen.

Um eine Aufheizung des Batteriegehäuses auf die Heißwasservorlauftemperatur zu vermeiden, ist es bei einer anderen Mischbatterie (DE 31 18 003 C2) bekannt, das Mischventil an der linken Seite des Batteriegehäuses anzuordnen und den Heißwasseranschluss unmittelbar zum Mischventil zu führen, während der Kaltwasseranschluss über einen im Randbereich des Gehäuses liegenden Kaltwasserkanal mit dem Mischventil verbunden ist, wobei der Kaltwasserkanal die Heiß- und/oder Mischwasser führenden Innenteile des Gehäuses zwischen Heiß- und Kaltwasseranschluss umspült.
Dieser bekannte Kaltwasserkanal lässt sich auf eine gattungsgemäße Mischbatterie, bei der das Mischventil auf der rechten Seite des Gehäuses angeordnet ist, nicht übertragen, da es allgemein vorgeschrieben ist, dass der Kaltwasseranschluss auf der rechten Seite und der Heißwasseranschluss auf der linken Seite des Batteriegehäuses vorzusehen ist.

Der Erfindung liegt die Aufgabe zugrunde, die im Oberbegriff des Anspruchs 1 angegebene Mischbatterie weiter zu verbessern und eine mit relativ einfachen Mitteln herstellbare Kühleinrichtung für den vom Heißwasserkanal beeinflussten Bereich des Batteriegehäuses zu schaffen.

Diese Aufgabe wird bei der gattungsgemäßen Mischbatterie erfindungsgemäß dadurch gelöst, dass im Gehäuse im rückwärtigen Bereich zunächst ein mit dem Kaltwasseranschluss in Verbindung stehender Kaltwasserkühlkanal vor dem Heißwasserkanal ausgebildet ist, derart, dass der Heißwasserkanal zwischen dem Kaltwasserkühlkanal und der Mischwasserkammer angeordnet ist.
Weitere Ausgestaltungen der Erfindung sind in den Ansprüchen 2 bis 18 angegeben.

Mit den erfindungsgemäßen Maßnahmen wird mit einfachen Mitteln eine wirksame Kühlung des vom Heißwasserkanal beeinflussten Bereich des Batteriegehäuses erreicht. Der vorgeschlagene Kaltwasserkühlkanal kann kostengünstig bei dem Gießvorgang in das Batteriegehäuse mit eingegossen werden.

In weiterer Ausgestaltung der Erfindung kann vorteilhaft am Ende des Kaltwasserkühlkanals im Bereich des Heißwasseranschlusses ein Kernlager für den Gießkern vorgesehen werden, das die Außenwand des Batteriegehäuses durchbricht und nach Abschluss des Gießvorgangs eine Öffnung bildet. Mit dieser Öffnung wird einerseits wirksam verhindert, dass bei der galvanischen O-berflächenveredelung des Batteriegehäuses kein Schöpfkanal entsteht, durch den im galvanischen Prozess eine Badverschleppung oder Badverschmutzung auftreten könnte, da die Badflüssigkeit über die vom Kernlager erzeugte Öffnung abfließen kann. Andererseits kann ein für den Verschluss der Öffnung vorgesehener Stopfen gleichzeitig für eine Entlüftung des Kaltwasserkühlkanals genutzt werden. Zweckmäßig kann in dem Stopfenkörper auch ein Entlüftungsventil angeordnet werden.
In einer bevorzugten Ausbildung der Erfindung wird der Stopfenkörper mit Gewinde in einer Bohrung der Trennwand zwischen dem Kaltwasserkühlkanal und dem Heißwasserkanal in der Einbauposition gehalten. Hierbei kann im Stopfenkörper eine oder vorzugsweise mehrere Drosselöffnungen ausgebildet werden, durch die, verursacht durch den normalerweise geringeren Fließdruck in dem Heißwasserkanal, eine bestimmte Menge des sich im Kaltwasserkühlkanal erwärmenden Kaltwassers in den Heißwasserkanal abgegeben wird, so dass bei einem längeren Wasserentnahmevorgang die Kühlwirkung des im Kaltwasserkühlkanal vorhandenen Kaltwassers gegenüber der Gehäuseaußenwandung im Wesentlichen aufrechterhalten werden kann. Hierbei hat sich als zweckmäßig erwiesen, wenn die Drosselöffnungen so dimensioniert werden, dass bei einer üblichen Fließdruckdifferenz zwischen dem Heißwasser und dem Kaltwasser etwa 0,8 bis 1,0 l/min von erwärmtem Kaltwasser in den Heißwasserkanal abgegeben wird. Hierbei tritt kaum eine Regelbeeinflussung bei dem in der Mischbatterie erzeugten Mischwasser auf.
Um bei einem Ausfall oder einer starken Absenkung des Kaltwasservorlaufdrucks ein Absperren des Heißwasserzuflusses sicherzustellen (Verbrühungsgefahr), wird zweckmäßig im Bereich der Drosselöffnung ein Rückflussverhinderer angeordnet, derart, dass ein Rückfluss von Heißwasser aus dem Heißwasserkanal in den Kaltwasserkühlkanal ausgeschlossen wird.

In einer anderen bevorzugten Ausgestaltung der Erfindung kann die dem Heißwasser zugeführte Menge von erwärmtem Kaltwasser aus dem Kaltwasserkühlkanal unabhängig von der Druckdifferenz zwischen dem zuströmenden Heißwasser und dem Kaltwasser annähernd konstant gehalten bzw. mit steigernder Druckdifferenz reduziert werden. Hiermit wird sichergestellt, dass bei einer relativ hohen Druckdifferenz zwischen dem Kalt- und Heißwasser, wie sie z.B. in Verbindung mit einem Durchlauferhitzer auftreten kann, die Heißwasservorlauftemperatur im Wesentlichen nicht beeinflusst wird, so dass eine Funktionsstörung bezüglich des Regelverhaltens der Mischbatterie weitgehend ausgeschlossen werden kann.
In einer weiteren Ausgestaltung der Erfindung kann das Drosselventilglied vorteilhaft als gummielastische Kugel ausgebildet sein, die in Abhängigkeit der herrschenden Druckdifferenz zwischen dem Kaltwasserkühlkanal und dem Heißwasserkanal unterschiedliche Stellungen in dem Drosselventil einnehmen kann, so dass die folgenden vier Funktionen von dem Drosselventil erfüllt werden können:
1. Bei einer Fließdruckdifferenz zwischen Kalt- und Heißwasser von ca. 0,5 bar wird sichergestellt, dass eine Wassermenge von etwa 1,5 l/min vom Kaltwasserkühlkanal in den Heißwasserkanal abgegeben wird.
2. Bei einem Ausfall des Kaltwasserzulaufdrucks wird von der Kugel verhindert, dass Heißwasser in den Kaltwasserkühlkanal einströmt.
3. Bei einem Ausfall des Heißwasserzulaufdrucks wird von der Kugel verhindert, dass aus dem Kaltwasserkühlkanal Wasser in den Heißwasserkanal überströmen kann.
4. Bei einer Druckdifferenz größer 0,5 bar vom Kaltwasserkühlkanal zum Heißwasserkanal wird von der Kugel eine Konstanthaltung bzw. Reduzierung der vom Kaltwasserkühlkanal in den Heißwasserkanal eintretenden Wassermenge bewirkt.

Das vorgeschlagene Drosselventil ermöglicht somit die Steuerung der Überströmmenge, wobei es zusätzlich die Funktion eines Doppel-Rückflussverhinderers hat.

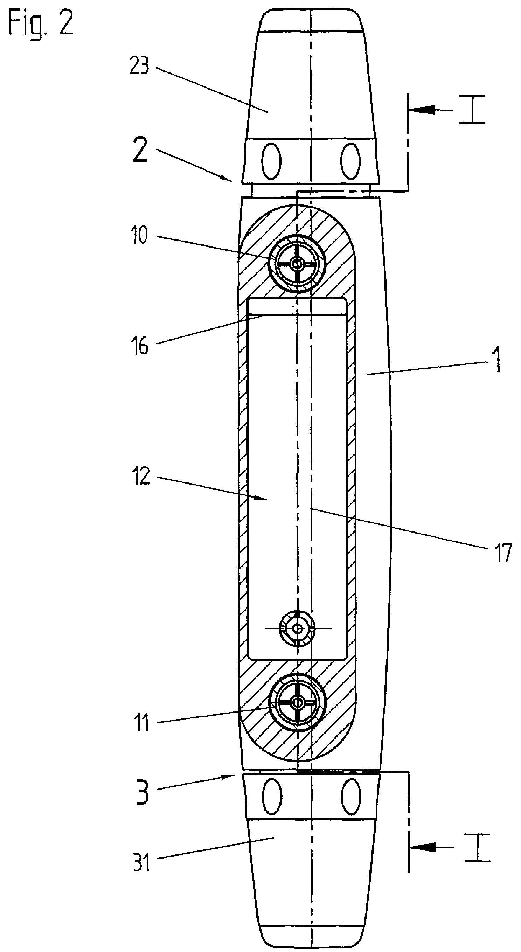

Ausführungsbeispiele der Erfindung sind in der Zeichnung dargestellt und werden im Folgenden näher beschrieben. Es zeigt
- Fig. 1: eine thermostatgeregelte Wassermischbatterie in der Schnittebene I der Fig. 2;
- Fig. 2: die in Fig. 1 gezeigte Mischbatterie in der Schnittebene II;
- Fig. 3: die in Fig. 1 gezeigte Mischbatterie in der Schnittebene III;
- Fig. 4: einen Teil der in Fig. 1 gezeigten Mischbatterie in vergrößerter Darstellung.
- Fig. 5: einen Teil einer anderen Thermostat geregelten Wassermischbatterie mit einem Drosselventil im Längsschnitt.

Der Einfachheit halber sind bei den Ausführungsbeispielen in der Zeichnung gleiche oder entsprechende Elemente mit jeweils gleichen Bezugszeichen versehen.
Die in der Zeichnung dargestellte Mischbatterie besteht im Wesentlichen aus einem Gehäuse 1, in dem auf einer Mittelachse 17 auf der rechten Seite ein thermostatgeregeltes Mischventil 2 und auf der linken Seite ein Mengenregulierventil 3 angeordnet ist.
Das Gehäuse 1 ist auf der linken Seite mit einem Heißwässeranschluss 11 für das Heißwasserversorgungsleitungsnetz und auf der rechten Seite mit einem Kaltwasseranschluss 10 für das Kaltwasserversorgungsleitungsnetz versehen, wobei der Abstand der beiden Anschlüsse zueinander dem genormten Stichmaß entspricht. Die Mischbatterie wird dabei um dem Kaltwasseranschluss 10 und dem Heißwasseranschluss 11 auf einer Gebäudewand oder dergleichen gehalten.
Das Mischventil entspricht im Wesentlichen dem in der EP 0 242 680 B1 beschriebenen. Das Kalt- und Heißwasser wird hierbei in zwei axial zueinander versetzt angeordneten Ringkammern 100,110 von dem Heißwasseranschluss 11 und dem Kaltwasseranschluss 10 separat zugeführt. Auf der Mittelachse 17 des Gehäuses 1 ist in einer Bohrung ein rohrförmiger Ventilkörper 20 angeordnet, der mit jeweils einem Kaltwasserventilsitz 21 in der Ringkammer 100 und einem Heißwasserventilsitz 22 in der Ringkammer 110 zusammenwirkt. Der Ventilkörper 20 ist in seiner Länge so bemessen, dass Einlassspalte für das zuströmende Kalt- und Heißwasser bestehen, derart, dass durch eine Axialbewegung der Abstand zu dem Heißwasserventilsitz 22 und dem Kaltwasserventilsitz 21 gegenläufig verändert wird, so dass mit der jeweiligen Axialposition das Mischungsverhältnis des zufließenden Heiß- und Kaltwassers bestimmbar ist. Zur Sollwerttemperatureinstellung ist ein Drehgriff 23 vorgesehen, mit dem der Ventilkörper 20 in die entsprechende Axialposition zwischen dem Kaltwasserventilsitz 21 und dem Heißwasserventilsitz 22 positionierbar ist. Entspricht das im Innern des rohrförmigen Ventilkörpers 20 erzeugte Mischwasser nicht der eingestellten Sollwerttemperatur, so wird dieses von einem Fühlbereich eines in der Zeichnung nicht dargestellten Thermostaten - in der Regel als Dehnstoffelement ausgebildet - erfühlt und durch eine Auslenkung eines Stößels des Thermostaten der Ventilkörper 20 in eine andere Axialposition verschoben, so dass die Isttemperatur des erzeugten Mischwassers dem Sollwert angenähert wird.

Das im Innern des Ventilkörpers 20 erzeugte Mischwasser wird koaxial zur Mittelachse 17 durch eine Öffnung in dem ringförmig ausgebildeten Heißwasserventilsitz 22 einem Verbindungsrohr 18 dem Mengenregulierventil 3 zugeführt. Das Mengenregulierventil 3 ist dabei mit einem auf der Mittelachse 17 angeordneten Drehgriff 31 versehen, mit dem die Durchflussmenge pro Zeiteinheit von der Absperrstellung bis zur voll geöffneten Position stufenlos eingestellt werden kann. Das Mischwasser wird hierbei von dem Mengenregulierventil 3 über eine Auslassöffnung 30 in eine Mischwasserkammer 14 des Gehäuses 1 abgegeben. Von hier aus gelangt es über einen Mischwasseranschluss 140 zu einem Verbraucher, beispielsweise einer Schlauchbrause.

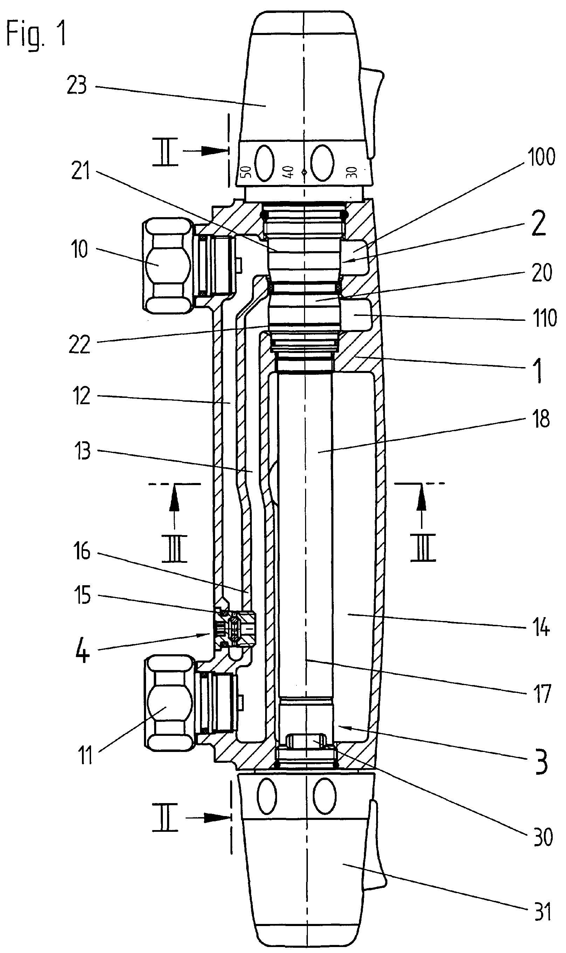

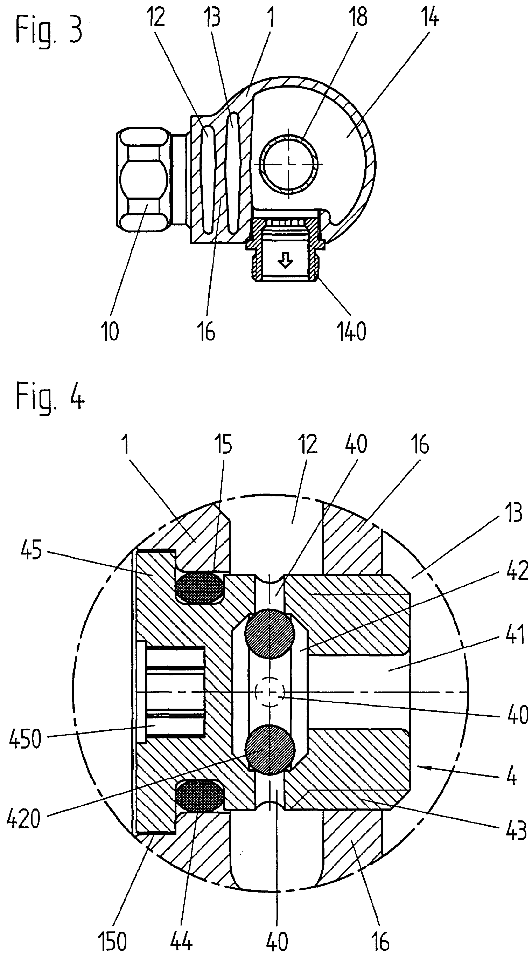

In dem Gehäuse 1 wird vom Heißwasseranschluss 11 die Verbindung zur Ringkammer 110 über einen im Gehäuse 1 ausgebildeten Heißwasserkanal 13 hergestellt. Damit eine Aufheizung des rückwärtigen Bereichs des Gehäuses 1 während der Mischwassererzeugung vermieden wird, ist ein parallel zum Heißwasserkanal 13 verlaufender Kaltwasserkühlkanal 12 vorgesehen, der mit dem Kaltwasseranschluss 10 in Verbindung steht. Der Heißwasserkanal 13 ist dabei zwischen dem Kaltwasserkühlkanal 12 und der Mischwasserkammer 14 angeordnet. Der Kaltwasserkühlkanal 12 erstreckt sich dabei ausgehend vom Kaltwasseranschluss 10 bis in die unmittelbare Nähe des Heißwasseranschlusses 11 über den nahezu gesamten rückwärtigen Bereich des Gehäuses 1, wie es insbesondere aus Fig. 3 der Zeichnung zu entnehmen ist, wobei der Heißwasserkanal 13 zu dem Kaltwasserkühlkanal 12 durch eine Trennwand 16 abgeschieden ist.
Das Gehäuse 1 ist im Metallgießverfahren hergestellt, wobei zur Halterung des Gießkerns in der Gießform im Endbereich des Kaltwasserkühlkanals 12 im Bereich des Heißwasseranschlusses 11 eine Öffnung 15 für ein Kernlager ausgebildet ist. Wie es insbesondere aus Fig. 4 zu entnehmen ist, kann diese Öffnung 15 für die Aufnahme eines Stopfenkörpers 4 vorgesehen werden. Mit dem Stopfenkörper 4 kann z. B. eine Entlüftung des Kaltwasserkühlkanals 12 bei der Inbetriebnahme der Mischbatterie erfolgen.
Wie es insbesondere aus Fig. 1 und Fig. 4 ersichtlich ist, ist der Stopfenkörper 4 mit einem Gewinde 43 in einer Bohrung in der Trennwand 16 zwischen dem Kaltwasserkühlkanal 12 und dem Heißwasserkanal 13 angeordnet, wobei in dem Stopfenkörper wenigstens eine, vorzugsweise vier, symmetrisch angeordnete Drosselöffnungen 40 vorgesehen sind, so dass das im Kaltwasserkühlkanal 12 sich aufheizende Kaltwasser über die Drosselöffnungen 40 in den Heißwasserkanal 13 geleitet und dem Heißwasser zugemischt wird. Die Zumischung des aufgeheizten Kaltwassers zum Heißwasser ist dadurch möglich, dass in der Regel der Fließdruck des Heißwassers niedriger ist als der des Kaltwassers. Um ein Rückfließen von Heißwasser aus dem Heißwasserkanal 13 in den Kaltwasserkühlkanal 12 bei einem Abfall oder Ausfall des Kaltwasservorlaufdrucks zu verhindern, wird zweckmäßig hinter den radial angeordneten Drosselöffnungen 40 eine im Querschnitt kreisförmige Kammer 42 ausgebildet, in der ein gummielastischer Ring 420 radial gegen die Wandung der Kammer 42 gedrückt ist, so dass bei gleichem Druck zwischen dem Kaltwasserkühlkanal 12 und dem Heißwasserkanal 13 oder höherem Druck im Heißwasserkanal die Drosselöffnungen 40 von dem Ring 420 verschlossen werden. Bei einem Druckgefälle zum Heißwasserkanal 13 hin werden dagegen die Drosselöffnungen 40 von dem Ring 420 freigegeben. Die Kammer 42 in dem Stopfenkörper 4 ist dabei über eine Axialbohrung 41 mit dem Heißwasserkanal 13 verbunden.
Der Stopfenkörper 4 ist an der Außenseite mit einem Dichtring 44 zur Öffnung 15 gedichtet, wobei der Stopfenkörper 4 mit einem im Durchmesser vergrößerten Kopfteil 45 in einer Aussenkung 150 des Gehäuses 1 aufgenommen wird. Für den Einschraubvorgang ist an der Außenseite ein Polygonprofil 450 für den Ansatz eines Drehwerkzeugs ausgebildet.

Für die Ausbildung der Drosselöffnungen hat sich als zweckmäßig erwiesen, vier symmetrisch angeordnete Radialbohrungen mit einem Durchmesser von 0,8 bis 1,0 mm vorzusehen, so dass aus dem Kaltwasserkühlkanal 12 etwa 0,8 bis 1,0 l/min in den Heißwasserkanal 13 abgegeben wird. Durch die Zuführung einer derart geringen Menge von Kaltwasser in den Heißwasserkanal tritt kaum eine Regelbeeinflussung beim erzeugten Mischwasser auf, wie durch Versuche ermittelt wurde.
Außerdem wurde durch Versuche ermittelt, dass mit den vorgeschlagenen Maßnahmen bei einer Heißwasservorlauftemperatur von 70°C und einer Kaltwasservorlauftemperatur von 17° bis 18°C bei der Mischwassereinstellung von 38°C die Aufheizung des Gehäuses 1 an der Rückseite nach ca. 5 Minuten Mischwasserentnahme
a) ohne Entlüftung des Kaltwasserkühlkanals 12 auf 42°C
b) mit Entlüftung des Kaltwasserkühlkanals 12 eine Aufheizung von 39°C
c) mit Drosseldurchfluss vom Kaltwasserkühlkanal 12 von 0,8 bis 1,0 l/min in den Heißwasserkanal 13 auf 34° bis 35°C
vermindert wurde.

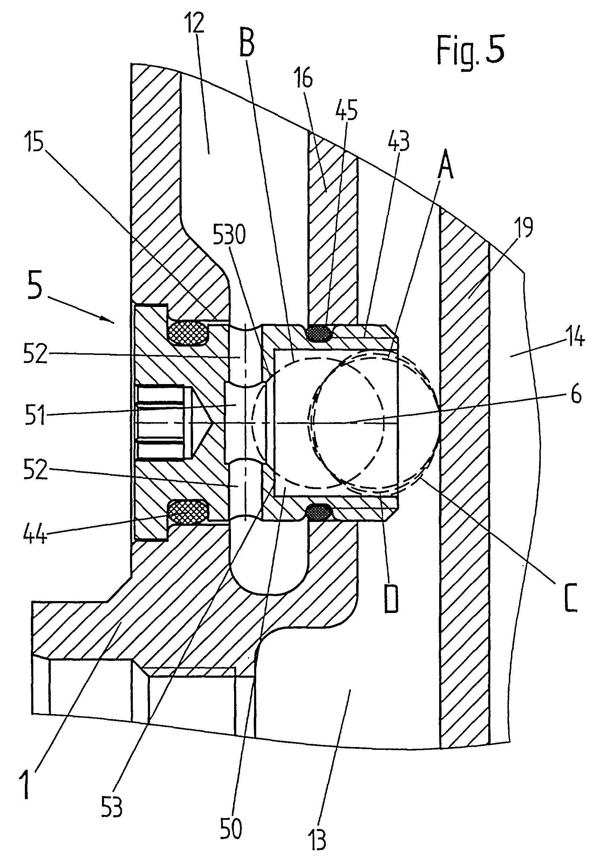

Bei dem in Fig. 5 gezeigten Ausführungsbeispiel ist anstatt der Drosselöffnungen ein Drosselventil vorgesehen.
In dem zum Teil dargestellten Batteriekörper 1 ist in einer Öffnung 15 ein in seinen äußeren Abmessungen als Stopfenkörper 5 ausgebildetes Drosselventil angeordnet. Der Stopfenkörper 5 ist dabei mit Gewinde 43 und Dichtmittel 45 in einer Trennwand 16 zwischen einem Kaltwasserkühlkanal 12 und einem Heißwasserkanal 13 eingeschraubt und mit einem Dichtring 44 nach außen abgedichtet. Im Bereich des Kaltwasserkühlkanals 12 sind in dem Stopfenkörper 5 Radialbohrungen 52 angeordnet, die mit einer Axialbohrung 51 in Verbindung stehen. Die Axialbohrung 51 erstreckt sich vom Bereich der Radialbohrungen 52 bis in den Bereich einer stromabwärts liegenden, koaxial angeordneten, mit einem größeren Durchmesser versehenen zylindrischen Führungsbohrung 50. Die Führungsbohrung 50 mündet im Heißwasserkanal 13. Der Übergang von der Axialbohrung 51 zur Führungsbohrung 50 ist als Stufe 53 ausgebildet. Im Zentrum der Stufe 53 ist ein Ventilsitz 530 ausgebildet.
In der Führungsbohrung 50 ist mit radialem Spiel eine Kugel 6 aus gummielastischem Werkstoff mit einer Shore-Härte < 60 angeordnet. Die Kugel 6 bildet das zwischen dem Ventilsitz 530 und der Stirnseite einer Gehäusewand 19 axial verschiebliche Drosselventilglied. Die Kugel 6 kann beispielsweise aus Weichgummi hergestellt werden.
Die Kugel 6 nimmt in Abhängigkeit zu dem Differenzdruck zwischen dem Kaltwasserkühlkanal 12 und dem Heißwasserkanal 13 unterschiedliche Positionen in der Führungsbohrung 50 ein.

In einer Position A ist die Kugel 6 von der Druckdifferenz im Wesentlichen nicht verformt, so dass durch den von der Außenoberfläche der Kugel 6 und der Innenmantelfläche der Führungsbohrung 50 begrenzten Spalt etwa 1,5 l/min von dem Kaltwasserkühlkanal 12 in den Heißwasserkanal 13 überströmen kann. Diese Position nimmt die Kugel 6 bei einer Fließdruckdifferenz von etwa 0,5 bar ein.

In einer Position B liegt die Kugel 6 an dem Ventilsitz 530 dichtend an. Diese Position nimmt die Kugel 6 dann ein, wenn der Druck in dem Kaltwasserkühlkanal 12 abfällt oder völlig ausfällt, so dass ein Überströmen von Heißwasser aus dem Heißwasserkanal 13 in den Kaltwasserkühlkanal 12 ausgeschlossen wird.

In einer Position C ist die Kugel 6 zu einem Rotationsellipsoid durch einen starken Druckabfall oder Druckausfall im Heißwasserkanal 13 verformt. Die ringförmige Mantelfläche der verformten Kugel 6 wird hierbei dichtend an die Innenwandung der zylindrischen Führungsbohrung 50 gepresst, so dass bei einem Ausfall des Heißwasserzulaufs das Überströmen von Kaltwasser aus dem Kaltwasserkühlkanal 12 verhindert wird.

In einer Position D befindet sich die Kugel 6 bei einer Druckdifferenz zwischen dem Kalt- und Heißwasser, die größer als 0,5 bar ist. Der gegenüber dem Heißwasserkanal 13 wesentlich höhere Druck im Kaltwasserkühlkanal 12 verformt die Kugel 6 zunehmend in ein Rotationsellipsoid, so dass in Abhängigkeit von der Druckdifferenz der Überströmspalt zwischen der Mantelfläche der Kugel 6 und der Innenwandung der zylindrischen Führungsbohrung 50 verringert wird, wobei oberhalb der Druckdifferenz von 0,5 bar zunächst die überströmende Wassermenge aus dem Kaltwasserkühlkanal in den Heißwasserkanal etwa konstant gehalten wird und bei weiter zunehmender Druckdifferenz zunehmend verringert wird.

## Patentansprüche

1. Mischbatterie zum Bereiten von temperiertem Warmwasser, insbesondere für Duschen, Badewannen oder dergleichen, mit einem wenigstens je einen Heiß- und Kaltwasseranschluss (11,10) und einen Mischwasserauslass aufweisenden Gehäuse (1), in dem auf der rechten Seite ein Mischventil (2) vorgesehen ist, wobei der Heißwasseranschluss (11) auf der linken Seite des Gehäuses (1) angeordnet und mit einem im Gehäuse (1) ausgebildeten Heißwasserkanal (13) mit dem Mischventil (2) verbunden ist, während der Kaltwasseranschluss (10) direkt mit dem Mischventil (2) verbunden ist und das erzeugte Mischwasser einer Mischwasserkammer (14) zugeführt wird, **dadurch gekennzeichnet, dass** im Gehäuse (1) im rückwärtigen Bereich zunächst ein mit dem Kaltwasseranschluss (10) in Verbindung stehender Kaltwasserkühlkanal (12) vor dem Heißwasserkanal (13) ausgebildet ist, derart, dass der Heißwasserkanal (13) zwischen dem Kaltwasserkühlkanal (12) und der Mischwasserkammer (14) angeordnet ist.

2. Mischbatterie nach Anspruch 1, **dadurch gekennzeichnet, dass** der Kaltwasserkühlkanal (12) als Sackkanal ausgebildet ist.

3. Mischbatterie nach Anspruch 1 oder 2, **dadurch gekennzeichnet, dass** das Gehäuse aus Metall gegossen ist und beim Gießvorgang ein Gießkern für den Kaltwasserkühlkanal (12) vorgesehen ist, der mit einem Kernlager an einem Ende im Bereich des Heißwasseranschlusses (11) aus dem Gehäuse (1) rückwärtig herausgeführt ist, wobei die durch das Kernlager erzeugte Öffnung (15) in der Gehäusewandung mit einem Stopfenkörper (4) verschließbar ist, so dass der Kaltwasserkühlkanal (12) mit Hilfe des Stopfenkörpers (4) entlüftbar ist.

4. Mischbatterie nach Anspruch 3, **dadurch gekennzeichnet, dass** in der Öffnung (15) ein Entlüftungsventil angeordnet ist.

5. Mischbatterie nach wenigstens einem der Ansprüche 1 bis 4, **dadurch gekennzeichnet, dass** der Kaltwasserkühlkanal (12) an seinem Ende im Bereich des Heißwasseranschlusses (11) über eine oder mehrere Drosselöffnungen mit dem Heißwasserkanal verbunden ist.

6. Mischbatterie nach Anspruch 5, **dadurch gekennzeichnet, dass** die Drosselöffnung oder die Drosselöffnungen mit wenigstens einem Rückflussverhinderer versehen ist oder sind.

7. Mischbatterie nach Anspruch 5 oder 6, **dadurch gekennzeichnet, dass** mehrere, vorzugsweise vier, Drosselöffnungen (40) mit kreisförmigem Querschnitt von etwa 0,8 mm Durchmesser als Radialbohrung in einem in die Öffnung (15) einsetzbaren Stopfenkörper (4) angeordnet sind, die in eine mit dem Heißwasserkanal (11) in Verbindung stehenden Axialbohrung (41) münden.

8. Mischbatterie nach Anspruch 7, **dadurch gekennzeichnet, dass** die Drosselöffnungen (40) in eine im Querschnitt kreisförmige Kammer (42) münden, die mit der Axialbohrung (41) in Verbindung steht, wobei ein gummielastischer Ring (420) in der Kammer (42) angeordnet ist, derart, dass er einen Rückfluss von Wasser aus der Axialbohrung (41) in die Drosselöffnungen (40) verhindert.

9. Mischbatterie nach wenigstens einem der vorgehenden Ansprüche, **dadurch gekennzeichnet, dass** der Stopfenkörper (4) mittels Gewinde (43) in einer Bohrung einer Trennwand (16) zwischen dem Kaltwasserkühlkanal (12) und dem Heißwasserkanal (13) in dem Gehäuse (1) der Mischbatterie gehalten ist, wobei der Stopfenkörper (4) in der Einschraublage mit einem Dichtring (44) gedichtet und mit einem Kopfteil (45) in einer Aussenkung (150) an der Außenseite des Gehäuses (1) anliegt.

10. Mischbatterie nach wenigstens einem der Ansprüche 1 bis 9, **dadurch gekennzeichnet, dass** der Kaltwasserkühlkanal (12) im Querschnitt sich im Wesentlichen über den Bereich der gesamten Rückseite des Gehäuses (1) erstreckt.

11. Mischbatterie nach wenigstens einem der vorhergehenden Ansprüche, **dadurch gekennzeichnet, dass** der Kaltwasserkühlkanal (12) über ein druckabhängiges Drosselventil an seinem Ende im Bereich des Heißwasseranschlusses (11) mit dem Heißwasserkanal (13) verbunden ist.

12. Mischbatterie nach Anspruch 11, **dadurch gekennzeichnet, dass** in dem Drosselventil als Drosselventilglied eine elastische Kugel (6) in einer zylindrischen Führungsbohrung (50) im Stopfenkörper (5) mit Spiel begrenzt zwischen einer im Durchmesser kleinen Axialbohrung (51) und einer im Heißwasserkanal (13) vorgesehenen Gehäusewand (19) angeordnet ist.

13. Mischbatterie nach Anspruch 12, **dadurch gekennzeichnet, dass** die Kugel (6) eine Shore-Härte von < 60 aufweist.

14. Mischbatterie nach Anspruch 13, **dadurch gekennzeichnet, dass** die Kugel (6) aus Weichgummi hergestellt ist.

15. Mischbatterie nach wenigstens einem der vorhergehenden Ansprüche, **dadurch gekennzeichnet, dass** die Kugel (6) und die zylindrische Führungsbohrung (50) so dimensioniert ist, dass bei einer Fließdruckdifferenz von 0,5 bar zum Heißwasserkanal (13) aus dem Kaltwasserkühlkanal (12) etwa 1,5 l/min Wasser in den Heißwasserkanal (13) überströmt (Position A der Kugel (6)).

16. Mischbatterie nach wenigstens einem der vorhergehenden Ansprüche, **dadurch gekennzeichnet, dass** die die Axialbohrung (51) am Übergang zur Führungsbohrung (50) umgebende Stirnfläche als Ventilsitz (530) für die Kugel (6) ausgebildet ist, so dass bei einem Ausfall des Drucks im Kaltwasserzufluss die Kugel (6) von der Druckdifferenz auf den Ventilsitz (530) gedrückt ist und den Durchfluss absperrt (Position B der Kugel (6)).

17. Mischbatterie nach wenigstens einem der vorhergehenden Ansprüche, **dadurch gekennzeichnet, dass** die Kugel (6) und die zylindrische Führungsbohrung (50) so dimensioniert sind, dass bei einem Ausfall des Drucks im Heißwasserzufluss die Führungsbohrung (50) von der durch die Druckdifferenz zwischen dem Heißwasserkanal (13) und dem Kaltwasserkühlkanal (12) verformten Kugel (6) abgesperrt ist (Position C der Kugel (6)).

18. Mischbatterie nach wenigstens einem der vorhergehenden Ansprüche, **dadurch gekennzeichnet, dass** die zylindrische Führungsbohrung (50) und die Kugel (6) so dimensioniert sind, dass bei einer oberhalb einer Fließdruckdifferenz von 0,5 bar zwischen dem Kaltwasserzufluss und dem Heißwasserzufluss der Durchtrittsspalt zwischen der Oberfläche der Kugel (6) und der Wandung der zylindrischen Führungsbohrung (50) sich entsprechend der zunehmenden Druckdifferenz verringert, derart, dass bei zunehmender Druckdifferenz die Durchflussmenge pro Zeiteinheit etwa konstant bleibt oder sich reduziert (Position D der Kugel (6)).
